**Europäisches Patentamt**

**European Patent Office**

**Office européen des brevets**

(19)

(11) Publication number : **0 331 659 B1**

(12) # EUROPEAN PATENT SPECIFICATION

(45) Date of publication of patent specification :
16.09.92 Bulletin 92/38

(51) Int. Cl.⁵ : **H02H 3/44**

(21) Application number : **89850072.3**

(22) Date of filing : **27.02.89**

(54) **A method to control stops of an intermittently operating driving motor.**

(30) Priority : **04.03.88 SE 8800772**

(43) Date of publication of application :
**06.09.89 Bulletin 89/36**

(45) Publication of the grant of the patent :
**16.09.92 Bulletin 92/38**

(84) Designated Contracting States :
**AT BE CH DE ES FR GB IT LI NL**

(56) References cited :
**EP-A- 0 095 590**
**FR-A- 2 410 154**
**PATENT ABSTRACTS OF JAPAN, vol. 9, no. 31**
**(E-295)(1754)09 February 1985;& JP-**
**A-59175393**

(73) Proprietor : **ITT Flygt Aktiebolag**
**Box 1309**
**S-171 25 Solna (SE)**

(72) Inventor : **Olsson, Staffan**
**N.Stationsgatan 115**
**S-113 33 Stockholm (SE)**

(74) Representative : **Larsson, Sten**
**ITT FLYGT AB Box 1309**
**S-171 25 Solna (SE)**

**EP 0 331 659 B1**

## Description

The invention concerns a method to control stops of an intermittently operating electric motor, such as a driving motor for a pump or a mixer, the stop being dependant of the current consumption.

When using pumps it is for serveral reasons important to avoid unnecessary dry running as this causes increased wear, additional current consumption etc.

Different types of stop devices for this purpose are known. The most common sense the head which means that they stop the pump at a certain minimum level. A disadvantage with this solution is that the level indicator is often sensitive to mechanical and chemical influence which means a big risk for error function .

One way to detect dry running without any level indicator is to analyze the motor current and sense its decrease which occurs when the pump starts to run dry. This can be obtained by comparing the value of actual current level with a fixed level or by detecting the variation of the current as disclosed for example in FR-A-2 410 154.

Closing at a certain current level can be obtained by connection of a current sensitive relay. Such a device can be a good solution during stationary conditions and when pumping relatively clean fluids. At changing operating conditions when the pump is moved or where hard wearing fluids are pumped, the level of current consumption changes relatively quick causing the relay to release at a wrong time. The trigging of the relay can also be an error source.

A stop depending on the change of the current also has certain disadvantages. At pump start the stop function must be set aside for a certain period (blank time) as otherwise a stop would take place immediately. This also means that a stop would not occur if the pump runs dry at the start and therefore a current decrease had already taken place before the end of the blank time.

The disadvantages mentioned above are eliminated by the invention defined in the claims.

According to the invention the current consumption of the electric motor is measured at even intervals and each value is compared with a running mean value of a number of previously measured values. If there is a deviation between actual value and the mean value which is more than a predetermined fraction, the motor is stopped.

The advantage as compared with the previously known method to compare actual value with a fixed value is, that the device has an updated point of comparison with regard to driving conditions. A continuous, slow, change of the current values, for instance depending on wear of the hydraulic parts of the pump, does not lead to pump stop. This would on the contrary be the fact if a constant current level would be used as a value of comparison. Thanks to the fact that the mean value is always renewed, an adaption of the mean value takes place thus avoiding false stops.

The invention is used in a device where signals measured by a current transformer are stored and analyzed by help of a micro processor. The measures are taken as random sampling and begin after a blank time during which the current value of the motor is stabilized. Random samples are then taken at even intervals. Each value is compared with a running mean value of previously read values. After a certain number of values have been read, each new value will replace the first value in the series. At a deviation from the mean value with a certain fraction the pump is stopped.

In the initial stage the first read value will be the mean value. Not until the determined number of values has been read in, every new read value will replace the first one in the series as described above. Normally the mean value will then be established by one value from each pump cycle, i e the last sample before the one that has led to a stop. According to another alternative several current values from each pump cycle are used to establish the mean value.

According to the invention a method has been obtained which in a simple and effective way controls the stops of the electric motor in an intermittantly operating pump or another machine. The invention secures a correct control which is entirely independant of the surroundings and gradual changes of operating conditions.

## Claims

1. A method to control stops of an intermittently operating electric motor such as a driving motor for a pump or a mixer, the stops being dependant of the current consumption, characterized in that the current consumption is measured at even time intervals, that actual current consumption is compared with the mean value of a number of previously measured values and that the motor is stopped when a predetermined difference between actual current consumption and said mean value is exceeded.

2. A method according to claim 1, characterized in that the mean value is calculated from a certain number of the latest measured values in such a way that each new measured value replaces the first stored value in the series.

3. A method according to claim 1, characterized in that the mean value is calculated from only one value from each operating cycle of the motor, which value is the latest measured value prior to the one that has led to stop of the motor.

## Patentansprüche

1.  Verfahren zum Steuern des Stoppens eines intermittierend arbeitenden Elektromotors, wie eines Antriebsmotors für eine Pumpe oder einen Mischer, wobei das Stoppen abhängig vom Stromverbrauch erfolgt,
    dadurch gekennzeichnet, daß der Stromverbrauch in gleichmäßigen Zeitintervallen gemessen wird, daß der tatsächliche Stromverbrauch mit dem Mittelwert einer Anzahl zuvor gemessener Werte verglichen wird, und daß der Motor gestoppt wird, wenn eine vorbestimmte Differenz zwischen dem tatsächlichen Stromverbrauch und dem Mittelwert überschritten wird.

2.  Verfahren nach Anspruch 1,
    dadurch gekennzeichnet, daß der Mittelwert aus einer bestimmten Anzahl der zuletzt gemessenen Werte in derartiger Weise berechnet wird, daß jeder neu gemessene Wert den zuerst gespeicherten Wert in der Serie ersetzt.

3.  Verfahren nach Anspruch 1,
    dadurch gekennzeichnet, daß der Mittelwert aus nur einem Wert aus jedem Betriebszyklus des Motors errechnet wird, wobei es sich bei diesem Wert um den zuletzt gemessenen Wert vor dem Wert, der zum Stoppen des Motors geführt hat, handelt.

## Revendications

1.  Procédé de commande des arrêts d'un moteur électrique fonctionnant de manière intermittente, tel qu'un moteur d'entraînement d'une pompe ou d'un mélangeur, les arrêts étant fonction de la consommation de courant, caractérisé en ce que la consommation de courant est mesurée à des intervalles de temps réguliers, en ce que la consommation de courant instantané est comparée avec la valeur moyenne d'un nombre de valeurs préalablement mesurées, et en ce que le moteur est arrêté lorsqu'une différence prédéterminée entre la consommation de courant instantanée et ladite valeur moyenne est dépassée.

2.  Procédé selon la revendication 1, caractérisé en ce que la valeur moyenne est calculée à partir d'un certain nombre des dernières valeurs mesurées de façon que chaque nouvelle valeur mesurée remplace la première valeur stockée dans la série.

3.  Procédé selon la revendication 1, caractérisé en ce que la valeur moyenne est calculée à partir seulement d'une valeur de chaque cycle de fonctionnement du moteur, laquelle valeur est la dernière valeur mesurée avant celle gui a conduit à l'arrêt du moteur.